# FASCICULE DE BREVET EUROPEEN

(11) **EP 1 183 518 B1**
(45) Date de publication et mention de la délivrance du brevet: **01.06.2005**
(21) Numéro de dépôt: 01917198.2
(22) Date de dépôt: 21.03.2001
(51) Int. Cl.: G01N 15/02

(54) **DISPOSITIF POUR DETERMINER LES VALEURS D'AU MOINS UN PARAMETRE DE PARTICULES, NOTAMMENT DE GOUTTELETTES D'EAU**
VORRICHTUNG ZUR BESTIMMUNG DER WERTE MINDESTENS EINES TEILCHENPARAMETERS, INSBESONDERE VON WASSERTRÖPFCHEN
DEVICE FOR DETERMINING THE VALUES OF AT LEAST ONE PARAMETER OF PARTICLES, IN PARTICULAR WATER DROPLETS

(30) Priorité: 07.04.2000 FR 0004432
(43) Date de publication de la demande: 06.03.2002
(73) Titulaire: AIRBUS FRANCE, 31060 Toulouse (FR)
(72) Inventeur: ROQUES, Sandrine, F-31320 Rebigue (FR); LOPEZ, Christian, F-31530 Le Castera (FR)
(74) Mandataire: Hauer, Bernard
(86) Numéro de dépôt international: PCT/FR2001/000842
(87) Numéro de publication internationale: WO 2001/077644

(56) Documents cités:
- WO-A-94/29762
- WO-A-95/12118
- DE-A- 19 510 034
- FR-A- 2 689 247

## Description

La présente invention concerne un dispositif pour déterminer les valeurs d'au moins un paramètre, notamment la taille, de particules telles que des gouttelettes d'eau.

Bien que non exclusivement, ledit dispositif est appliqué plus particulièrement à la détection et à la caractérisation de conditions givrantes sur des aéronefs, notamment des avions de transport civil, en permettant la mesure de la taille et du nombre des gouttelettes d'eau présentes en particulier dans les nuages et les brouillards traversés par un aéronef.

On sait que le problème de formation rapide de givre sur un aéronef est un problème grave qui peut entraîner des accidents lorsqu'il se produit soudainement et qu'il n'a pas pu être détecté à temps.

Par les documents US-5 484 121, EP-0 405 625 et GB-2 158 939, on connaît des dispositifs pour détecter la présence de glace (ou de givre) sur les parties externes d'un aéronef, notamment les ailes, une fois que cette glace est formée. Ces dispositifs utilisent, à cet effet, des faisceaux lumineux et tiennent compte de la réflexion de ces faisceaux lumineux pour détecter la présence de glace. Le cas échéant, un signal est émis pour informer le pilote qu'il est nécessaire de déclencher un dispositif de dégivrage.

Ces dispositifs connus présentent, notamment, l'inconvénient d'avertir le pilote uniquement lorsque la glace est déjà formée. Ils ne permettent donc pas d'anticiper le phénomène de formation de glace et de prendre des décisions adaptées aux conditions climatiques avant qu'un problème n'apparaisse.

On connaît d'autres dispositifs pour caractériser des conditions givrantes, notamment lors de vols de développement ou d'essai. On sait que, lors de vols de développement, on doit démontrer que les conditions rencontrées sont bien conformes aux exigences réglementaires édictées par les autorités de certification, ce qui valide alors le comportement de l'avion dans de telles conditions.

Les dispositifs connus, utilisés à cet effet, sont destinés généralement à déterminer la granulométrie des nuages, c'est-à-dire la taille, le nombre et la forme des gouttelettes d'eau présentes dans ces nuages, et ils peuvent être classés en deux catégories :
- les compteurs de particules qui déterminent les caractéristiques de chaque particule, prise individuellement ; et
- les intégrateurs qui font la somme des contributions de toutes les particules présentes dans un volume de mesure.

Ces dispositifs connus peuvent également être classés en fonction de leur principe de mesure, à savoir en particulier :
- l'imagerie ou l'ombroscopie,
- l'effet Doppler, ou
- la diffusion de la lumière (mesure selon des angles donnés).

A titre d'illustration, on peut citer quelques exemples de dispositifs connus mettant en oeuvre des principes d'imagerie et d'ombroscopie et agissant, par exemple, comme compteurs de particules.

Premièrement, un dispositif qui est connu sous l'expression anglaise "Optical Array Probe" met en oeuvre, de façon usuelle, le principe dit de l'ombroscopie à barrette. Dans ce cas, une particule passant dans un faisceau lumineux collimaté produit une ombre directement liée à son diamètre sur une barrette de détecteurs espacés d'intervalles égaux. Quand il n'y a pas de particule dans le volume de mesure considéré, le faisceau lumineux éclaire tous les détecteurs. En revanche, quand une particule traverse ledit volume de mesure, une perte de lumière due aux diffusion, réfraction et absorption de la particule engendre un signal à la sortie des détecteurs. Le nombre de détecteurs accusant une variation d'amplitude de plus d'un seuil déterminé (par exemple de 50%) est sommé pour donner directement la taille de la particule. Toutefois, ce dispositif connu présente une gamme de mesure limitée et ne peut pas mesurer avec précision des particules dont le diamètre est inférieur à 100 µm.

Deuxièmement, un dispositif qui est connu sous l'expression anglaise "Cloud Particle Imager" engendre deux faisceaux laser. L'intersection de ces deux faisceaux laser définit une aire d'échantillonnage rectangulaire. Toute particule qui passe par cette aire d'échantillonnage rectangulaire est bien focalisée et déclenche une illumination par un laser d'imagerie, en vue de réaliser une prise d'image. Des détecteurs sont placés en face des faisceaux laser : ils permettent de détecter le passage de particules par la mesure de la diminution d'intensité produite au passage de ces particules. La mesure du diamètre des particules est effectuée à partir de l'image de la particule bien focalisée. Toutefois, ce dispositif connu est encombrant et présente un volume trop important pour apporter une amélioration aux difficultés opérationnelles indiquées ci-dessous et liées aux dispositifs actuellement utilisés en essai en vol.

Troisièmement, par le document FR-2 689 247, on connaît un dispositif de mesure comportant notamment :
- une canne comprenant une zone de mesure qui est destinée à recevoir les particules à analyser ;
- des moyens d'illumination susceptibles de réaliser une illumination de ladite zone de mesure, au moyen d'au moins un faisceau lumineux ;
- des moyens de prise de vue susceptibles de prendre des images de ladite zone de mesure illuminée par lesdits moyens d'illumination ; et
- des moyens de traitement susceptibles de déterminer les valeurs dudit paramètre, à partir desdites images.

Plus précisément, ce dernier dispositif connu émet un faisceau lumineux pulsé qui est transporté par fibre optique et qui est focalisé sur la zone de mesure. Le transport de l'image se fait aussi par fibre optique jusqu'à une lame séparatrice qui divise et oriente le faisceau vers les moyens de prise de vue comprenant deux capteurs de type "CCD". Une première image est enregistrée suivant un certain axe de visée sur l'un des capteurs. Après un temps très court, on enregistre une seconde image suivant le même axe de visée sur l'autre capteur. A partir de la soustraction de ces deux images, on obtient un doublet sombre/clair qui est bien détaché du fond uniforme, à partir duquel il est possible de déduire la taille et la vitesse des particules imagées. Ce dispositif connu permet d'éliminer la plupart des défauts du fond. Les moyens de prise de vue à double capteur se comportent en effet comme un double obturateur et ne voient le champ que pendant deux laps de temps très courts.

Toutefois, ce dispositif connu présente un volume de mesure réduit. On sait que le volume de mesure analysé par seconde est égal au volume de mesure associé à chaque image, multiplié par la cadence image des moyens de prise de vue.

Le volume de mesure associé à chaque image est lié, quant à lui, à la taille du capteur (divisée par le grandissement) et à la profondeur de champ.

Par conséquent, notamment en raison de son volume de mesure réduit, le dispositif connu divulgué par le document FR-2 689 247 n'est pas adapté aux applications envisagées dans la présente invention, concernant la mesure de paramètres de gouttelettes d'eau, puisque, notamment en raison des concentrations souvent relativement faibles des gouttelettes d'eau présentes dans les nuages analysés au cours d'essais, un volume de mesure important est nécessaire pour une telle application.

On notera, par ailleurs, que les différents dispositifs connus comportent divers inconvénients gênants pour l'application préférée précitée. En effet, les dispositifs connus sont, en général, mal adaptés aux contraintes métrologiques et opérationnelles envisagées, en raison en particulier des difficultés suivantes : une installation longue et difficile dans un aéronef, un encombrement très important, une exploitation difficile des résultats, ... De plus, la plupart de ces dispositifs connus présentent une gamme de mesure de la taille des gouttelettes, qui est réduite, et ne sont notamment pas en mesure de détecter et analyser en même temps les petites et les grosses gouttelettes surfondues (eau à température inférieure à 0°C) et connues sous l'expression anglaise "Super Cooled Large Droplet", qui, comme on le sait, favorisent l'apparition de givre.

La présente invention concerne un dispositif pour déterminer les valeurs d'au moins un paramètre, notamment la taille, de particules, en particulier des gouttelettes d'eau, qui permet de remédier aux inconvénients précités et qui comprend notamment un volume de mesure élargi.

A cet effet, selon l'invention, ledit dispositif du type comportant :
- un élément de mesure comprenant une zone de mesure qui est destinée à recevoir les particules ;
- des moyens d'illumination susceptibles de réaliser une illumination de ladite zone de mesure ;
- des moyens de prise de vue comportant au moins une caméra susceptible de prendre au moins une image de ladite zone de mesure illuminée par lesdits moyens d'illumination ; et
- des moyens de traitement susceptibles de déterminer les valeurs dudit paramètre, à partir de ladite image prise par la caméra, est remarquable en ce que lesdits moyens d'illumination sont formés de manière à réaliser une source d'illumination ponctuelle, au moyen d'un faisceau lumineux, dont les rayons lumineux sont focalisés sur une optique d'objectif des moyens de prise de vue.

Ainsi, grâce à cette illumination ponctuelle, on augmente le contraste (sur la ou les images prises) de l'ombre des particules situées dans la zone de mesure. Cette augmentation du contraste entraîne une meilleure observabilité des particules en défaut de mise au point et donc une augmentation de la profondeur de champ, puisque l'image reste observable pour des valeurs de défocalisation plus importantes. Cette augmentation de la profondeur de champ entraîne, quant à elle, un élargissement du volume de mesure qui, comme indiqué précédemment, dépend de la taille du capteur et de la profondeur de champ.

Dans un mode de réalisation préféré, pour réaliser ladite illumination ponctuelle, lesdits moyens d'illumination comportent au moins un ensemble optique comprenant :
- une source lumineuse, de préférence une source laser, susceptible d'engendrer un faisceau lumineux ;
- une fibre optique reliée par une première extrémité à ladite source lumineuse et susceptible de transmettre un faisceau lumineux engendré par cette dernière ; et
- une optique de champ agencée à une seconde extrémité opposée à ladite première extrémité de ladite fibre optique et focalisant le faisceau lumineux émergeant de ladite fibre optique au centre de l'optique d'objectif de la caméra desdits moyens de prise de vue.

De préférence, ladite fibre optique est une fibre monomode, c'est-à-dire une fibre qui permet par construction de ne transmettre qu'un seul mode d'un faisceau laser. Ceci permet d'empêcher l'apparition d'un bruit parasite.

En outre, pour augmenter davantage encore le volume de mesure, de façon avantageuse :
- lesdits moyens d'illumination comportent une source lumineuse engendrant un faisceau lumineux cohérent, ce qui permet d'augmenter le contraste précité ; et/ou
- on utilise une caméra qui présente une cadence de prise d'image élevée ; et/ou
- ladite caméra comprend des moyens qui réalisent une ouverture de cette dernière pour prendre une image, lesdits moyens d'illumination réalisent l'illumination sous forme d'éclairs lumineux et sont commandés de manière à émettre au moins deux éclairs lumineux pendant une seule et même ouverture de la caméra lors d'une prise d'image. Ainsi, on multiplie le volume de mesure qui est observé pendant la durée d'ouverture de la caméra.

Pour la mise en oeuvre de cette dernière caractéristique, de préférence, lesdits moyens d'illumination comportent un laser pulsé à absorbant saturable pour émettre lesdits éclairs lumineux, c'est-à-dire un laser permettant d'émettre des éclairs lumineux de très courtes durées. Ceci permet de s'affranchir de la vitesse d'écoulement des particules. En effet, l'éclair lumineux fige les particules.

Par ailleurs, pour augmenter la gamme des tailles de particules mesurées, notamment de gouttelettes d'eau, de façon avantageuse, lesdits moyens d'illumination sont formés de manière à émettre de façon séquentielle au moins deux faisceaux lumineux dédiés à une mesure de diamètres différents.

Pour ce faire, dans un mode de réalisation préféré, lesdits moyens d'illumination comportent deux sources laser associées respectivement à des optiques de grandissements différents, et lesdits moyens de prise de vue comportent une seule caméra et des moyens optiques permettant de diriger les deux faisceaux laser émis par lesdites deux sources laser, sur ladite caméra.

Pour augmenter davantage encore la gamme de mesure, lesdits moyens de traitement sont formés de manière à déterminer ledit paramètre par ombroscopie.

Par ailleurs, de façon avantageuse, lesdits moyens d'illumination sont formés de manière à émettre deux éclairs lumineux espacés d'une durée prédéterminée, ladite caméra est formée de manière à prendre une image lors de l'émission de chacun desdits éclairs lumineux, et lesdits moyens de traitement sont formés de manière à déterminer, comme paramètre, le vecteur vitesse desdites particules, à partir de la superposition de deux images relatives auxdits deux éclairs lumineux et de ladite durée prédéterminée.

A cet effet, lesdits moyens d'illumination comportent, de préférence, une source lumineuse et une fibre optique qui est reliée à ladite source lumineuse.

En outre, avantageusement, le dispositif conforme à l'invention comporte de plus :
- un filtre interférentiel qui est agencé à l'entrée de ladite caméra, pour s'affranchir de la lumière parasite, pouvant atteindre la caméra ; et/ou
- un traitement antireflet, pour éviter les interférences ; et/ou
- une zone de mesure qui est délimitée par au moins un hublot ; et/ou
- des moyens pour souffler de l'air, de préférence filtré, sur la face externe dudit hublot, ce qui empêche l'apparition de salissure sur ledit hublot.

Dans un mode de réalisation préféré, ledit élément de mesure est une canne pourvue d'une ouverture traversante, de préférence oblongue, à une première de ses extrémités, ladite ouverture traversante contenant ladite zone de mesure.

En outre, avantageusement, le dispositif conforme à l'invention comporte de plus une protection précisée ci-dessous, qui protège contre lesdites particules généralement en mouvement, tout ledit dispositif, à l'exception d'au moins ladite première extrémité de la canne qui est amenée, quant à elle, directement dans l'environnement contenant lesdites particules.

En outre, avantageusement, au moins ladite première extrémité de la canne est isolée électriquement de manière à rendre le dispositif conforme à l'invention peu attractif vis-à-vis de la foudre, par exemple dans le cas où ledit dispositif est agencé sur un aéronef, comme précisé ci-dessous.

On notera, par ailleurs, que le dispositif conforme à l'invention est particulièrement bien approprié pour fournir, à des autorités de certification, des informations fiables et de qualité sur les conditions rencontrées par un aéronef lors d'essais en vol. Bien entendu, d'autres possibilités d'utilisation s'offrent à lui, telles que la certification d'hélicoptères en vols stationnaires, la vérification des conditions produites dans des souffleries givrantes, des mesures au sol lors de mauvaises conditions de visibilité (brouillard, ...), ...

Une autre application intéressante concerne la prévention et l'anticipation de conditions givrantes sur un aéronef. En effet, comme indiqué précédemment, la plupart des dispositifs existants n'avertissent le pilote qu'une fois que le givre est installé sur les zones sensibles de l'aéronef. Au contraire, la connaissance des conditions qui amènent à la formation de givre par l'étude des gouttelettes qui composent le nuage, associée à des informations de températures, permet d'anticiper cette formation de givre. Ainsi, grâce au dispositif conforme à l'invention qui permet l'étude des gouttelettes d'eau sur toute la gamme de mesure à prendre en compte, il est possible d'avertir le pilote de la probable formation de givre avant que celui-ci ne se forme sur les zones sensibles de l'aéronef.

La présente invention concerne également un aéronef, en particulier un avion de transport civil, qui est remarquable en ce qu'il comporte un dispositif tel que celui précité, pour déterminer les valeurs dudit paramètre de gouttelettes d'eau présentes à l'extérieur dudit aéronef.

De façon avantageuse, ledit aéronef comporte de plus un fourreau :
- qui est agencé dans le fuselage de l'aéronef de manière à créer une ouverture traversante ;
- qui présente un diamètre adapté au diamètre de la canne précitée du dispositif conforme à l'invention de sorte que cette dernière puisse être agencée de façon étanche dans ledit fourreau ; et
- qui est susceptible d'être fermé de façon étanche, en l'absence de ladite canne.

Ainsi, le dispositif conforme à l'invention peut être monté et démonté facilement et rapidement. De plus, on ne modifie que légèrement l'aérodynamique de l'aéronef.

Les figures du dessin annexé feront bien comprendre comment l'invention peut être réalisée. Sur ces figures, des références identiques désignent des éléments semblables.
La figure 1 illustre schématiquement un dispositif conforme à l'invention.
La figure 2 est un schéma optique permettant d'illustrer un principe de fonctionnement du dispositif conforme à l'invention.
Les figures 3 et 5 sont des vues schématiques, respectivement latérale et de dessous d'un mode de réalisation préféré du dispositif conforme à l'invention.
La figure 4 est une coupe schématique selon la ligne IV-IV de la figure 3.
La figure 6 illustre schématiquement un mode de réalisation particulier de l'invention.
Les figures 7 et 8 montrent partiellement un fuselage d'un aéronef destiné à recevoir un dispositif conforme à l'invention, respectivement en présence et en l'absence d'un tel dispositif.

Le dispositif 1 conforme à l'invention est destiné à déterminer au moins un paramètre, tel que la taille, la vitesse ou la direction de déplacement, de particules telles que des gouttelettes d'eau par exemple.

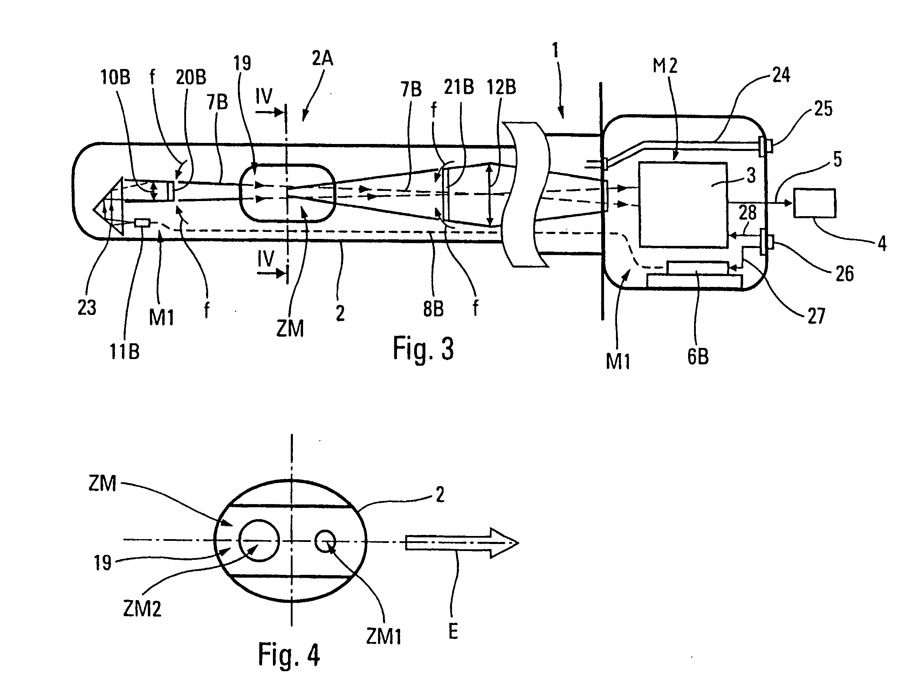

A cet effet, ledit dispositif 1 comporte de façon connue et générale, comme représenté dans un mode de réalisation préféré sur les figures 3 à 5 :
- un élément de mesure 2 comprenant une zone de mesure ZM qui est destinée à recevoir lesdites particules ;
- des moyens d'illumination M1 précisés ci-dessous susceptibles de réaliser une illumination de ladite zone de mesure ZM, au moyen d'au moins un faisceau lumineux 7A, 78 ;
- des moyens de prise de vue M2 comportant au moins une caméra 3 susceptible de prendre au moins une image de ladite zone de mesure ZM illuminée par lesdits moyens d'illumination M1 ; et
- une unité de traitement 4 reliée auxdits moyens de prise de vue M2 par l'intermédiaire d'une liaison 5 et susceptibles de déterminer, de préférence par ombroscopie, les valeurs dudit paramètre, à partir de ladite image prise par la caméra 3.

Selon l'invention, lesdits moyens d'illumination M1 sont formés de manière à réaliser une illumination ponctuelle, au moyen d'un faisceau lumineux 7A, 7B comprenant des rayons lumineux RA, RB qui sont focalisés de la manière indiquée ci-dessous.

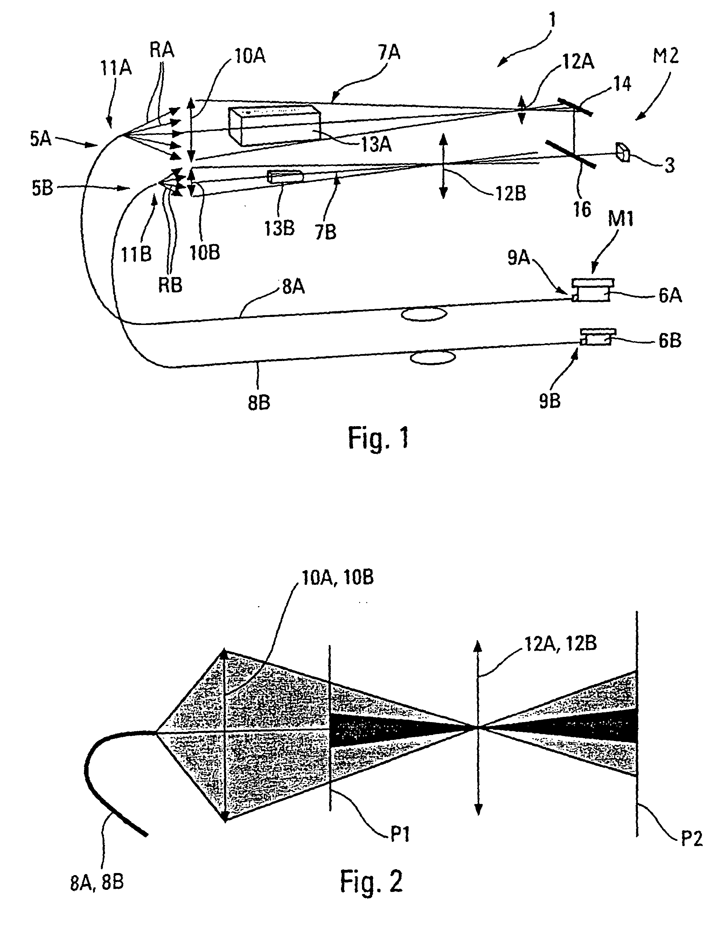

A cet effet, dans un mode de réalisation préféré, lesdits moyens d'illumination M1 comportent, comme représenté de façon schématique sur la figure 1, au moins un ensemble optique 5A, 5B comprenant :
- une source lumineuse 6A, 68, de préférence une source laser, susceptible d'engendrer un faisceau lumineux 7A, 7B ;
- une fibre optique 8A, 8B reliée, par une première extrémité 9A, 9B, à ladite source lumineuse 6A, 6B et susceptible de transmettre un faisceau lumineux 7A, 7B engendré par cette dernière ; et
- une optique de champ 10A, 10B agencée à une seconde extrémité 11 A, 11 B qui est opposée à ladite première extrémité 9A, 9B de ladite fibre optique 8A, 8B et focalisant le faisceau lumineux 7A, 7B émergeant de ladite fibre optique 8A, 8B sur une optique d'objectif 12A, 12B de la caméra 3 desdits moyens de prise de vue M2.

L'optique de champ 10A, 10B focalise le faisceau lumineux 7A, 7B émergeant de la fibre optique 8A, 8B, de préférence un faisceau laser, au centre de l'optique d'objectif 12A, 12B, c'est-à-dire canalise les rayons RA, RB dudit faisceau lumineux 7A, 7B émergeant.

L'optique d'objectif 12A, 12B forme l'image de l'objet dans le plan conjugué. Pour bien mettre en évidence cette caractéristique, on a représenté sur la figure 2 le plan objet P1 et le plan P2 de la caméra 3.

Grâce à cette illumination "ponctuelle", on augmente le contraste (sur la ou les images prises) de l'ombre des particules situées dans la zone de mesure ZM (plan P1). Cette augmentation du contraste entraîne une meilleure observabilité des particules en défaut de mise au point et donc une augmentation de la profondeur de champ, puisque l'image reste observable pour des valeurs de défocalisation plus importantes. Cette augmentation de la profondeur de champ entraîne, quant à elle, un accroissement du volume de mesure qui dépend de façon connue, à la fois de la taille du capteur, de préférence un capteur CCD, de la caméra 3 et de la profondeur de champ.

On notera qu'avec une ombroscopie usuelle par illumination non ponctuelle (ou illumination diffuse), comme divulgué par exemple par le document FR-2 689 247 précité, les ombres portées par chaque point de la source lumineuse ne se chevauchent pas exactement. L'ombre de l'objet est alors éclairé par de la lumière parasite provenant de ladite source, ce qui bien entendu est préjudiciable pour le contraste. Grâce à la présente invention, on remédie efficacement à ce problème.

Selon l'invention, la fibre optique 8A, 8B est une fibre monomode. Ce type de fibre permet, par construction, de ne transmettre qu'un mode du faisceau laser 7A, 7B et évite ainsi tout bruit parasite. La surface de la "source" est alors réduite à un diamètre de quelques microns. L'utilisation d'une fibre optique permet de plus d'installer facilement la source lumineuse 6A, 6B dans une zone protégée, par exemple dans une cabine d'un avion.

En outre, selon l'invention, l'optique de champ 10A, 10B et l'optique d'objectif 12A, 12B peuvent être des lentilles simples ou des jeux de lentilles.

De plus, le diamètre de l'optique d'objectif 12A, 12B est dimensionné pour que la précision des mesures ne soit pas dégradée par des phénomènes de diffraction. Ces phénomènes sont liés à la dimension de la pupille d'entrée (diamètre de l'optique d'objectif) et à la longueur d'onde utilisée. Aussi, pour éviter de tels problèmes de diffraction, on utilise, de préférence, une source laser du type "yag" doublé à une longueur d'onde préférentielle de 532 nm.

En outre, pour accroître davantage encore le volume de mesure, notamment en contribuant à augmenter le contraste, de façon avantageuse :
- lesdits moyens d'illumination M1 comportent au moins une source lumineuse 6A, 6B, de préférence une source laser, engendrant un faisceau lumineux 7A, 7B cohérent, ce qui permet d'augmenter le contraste précité ;
- on utilise une caméra 3 qui présente une cadence de prise d'image élevée, par exemple une caméra du type "CAD6" permettant une cadence de 262 trames/seconde avec une résolution de 512 x 512 pixels ; et
- dans un mode de réalisation particulier, ladite caméra 3 comprend des moyens connus et non représentés, qui réalisent une ouverture de cette dernière pour prendre une image, lesdits moyens d'illumination M1 réalisent l'illumination sous forme d'éclairs lumineux et ils sont commandés de manière à émettre au moins deux éclairs lumineux pendant une ouverture de la caméra 3 lors d'une prise d'image. Ainsi, on multiplie le volume de mesure qui est observé pendant la durée d'ouverture de la caméra 3.

Ceci n'est possible qu'en diminuant l'intensité du faisceau laser pour ne pas saturer la caméra 3. En pratique, on préfère limiter le nombre d'éclairs lumineux à deux ou trois, car cette technique présente l'inconvénient de diminuer le rapport signal/bruit. On multiplie ainsi le volume observé durant la période d'ouverture de la caméra par le nombre d'éclairs lumineux prévus par image.

On notera que la périodicité de ces éclairs lumineux tient compte du temps de vidage des pixels de la caméra 3 (temps mort pendant lequel l'acquisition d'une nouvelle image n'est pas possible).

De plus, l'utilisation d'éclairs lumineux de courte durée permet de s'affranchir de la vitesse d'écoulement des particules. En effet, un tel éclair lumineux fige la particule. Le dispositif 1 conforme à l'invention permet donc de mesurer les caractéristiques de particules telles que des gouttelettes d'eau, pour des vitesses sensiblement nulles jusqu'à de grandes vitesses (V > 150 m/s). Néanmoins, pour les vitesses élevées, il est nécessaire d'illuminer les gouttelettes par des éclairs lumineux de durée suffisamment courte pour les figer dans leur déplacement. Pour des vitesses de l'air de l'ordre de 100 à 150 m/s, la durée de l'éclair ne doit pas excéder 5 à 10 ns. C'est pour cette raison que la source laser préférée est un laser pulsé à absorbant saturable (de type "Q-switch") qui engendre des impulsions de durée inférieure à 1 ns. Cette source laser présente de plus l'avantage d'être légère et peu encombrante.

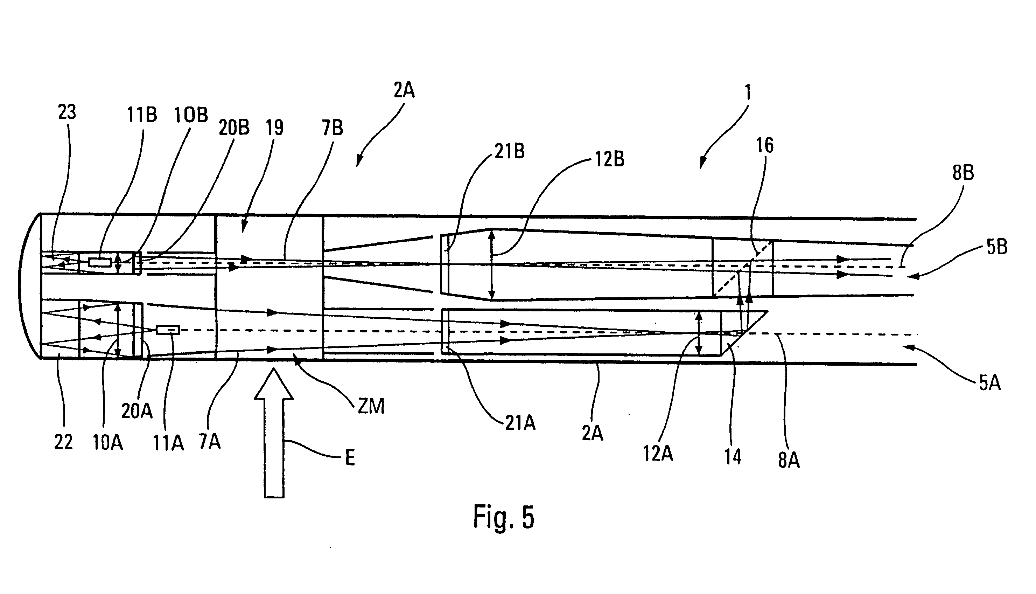

Par ailleurs, pour augmenter la gamme de mesure de la taille des particules ou gouttelettes d'eau, les moyens d'illumination M1 comportent, selon l'invention, comme représenté sur les figures 1 et 5, les deux ensembles optiques 5A et 5B précités, émettant chacun de façon séquentielle un faisceau laser 7A et 7B de diamètre différent adapté au champ observé. Cette différence de diamètre, qui est due notamment à des grandissements différents des optiques 12A, 12B, est illustrée sur la figure 1 par des parallélépipèdes rectangles 1 3A et 13B de différentes tailles. A titre d'illustration, les optiques 12B et 12A peuvent être réglées pour procurer, respectivement, un grandissement de 3, adapté à l'observation des petites gouttelettes (de 10 µm à 50 µm environ) présentes dans un premier espace de mesure ZM1 représenté sur la figure 4, et un grandissement de 0,66 apte à observer les grosses gouttelettes (de 50 µm à 600 µm) présentes dans un second espace de mesure ZM2, ce qui permet d'obtenir globalement une gamme de mesure de 10 µm à 600 µm. De plus, ces grandissements permettent de couvrir toute la plage de diamètre sans distorsion dans la zone de recoupement.

Dans ledit mode de réalisation préféré, le dispositif 1 comporte une unique caméra 3 et les moyens de prise de vue M2 comportent de plus, comme représenté sur les figures 1 et 5 :
- un prisme de renvoi 14, de type usuel, agencé sur le trajet optique d'un premier faisceau 7A desdits faisceaux 7A, 7B ; et
- une lame semi-réfléchissante 16, de type usuel, agencée sur le trajet optique du second faisceau 7B, ainsi que sur le trajet optique de renvoi du premier faisceau 7A, en aval du prisme de renvoi 14.

On notera que la longueur d'onde, la taille des optiques et le grandissement permettent de définir la dimension minimale des particules mesurables. Le diamètre de la tache de diffraction ou tache d'Airy est lié à la longueur d'onde et au diamètre de la pupille. Le grandissement permet de choisir le nombre de pixels qui sont recouverts par la particule la plus petite que l'on souhaite observer. Pour observer des particules de taille supérieure ou inférieure à la gamme de mesure précitée, il convient donc de modifier les caractéristiques optiques, que sont la longueur d'onde, le diamètre des optiques et/ou le grandissement.

La profondeur de champ est augmentée davantage encore, en utilisant le principe connu de l'ombroscopie pour déterminer la taille à partir des images prises par les moyens de prise de vue M2. Des algorithmes appropriés et usuels sont, à cet effet, intégrés dans l'unité de traitement 4.

Dans le mode de réalisation préféré représenté sur les figures 3 à 5, le dispositif 1 comporte de plus :
- un élément de mesure 2 en forme de canne, qui est pourvu à proximité de son extrémité libre 2A d'une ouverture traversante 19 contenant la zone de mesure ZM qui comprend les deux espaces de mesure ZM1 et ZM2 précités. Les particules à mesurer traversent l'ouverture 19 selon un sens d'écoulement E ;
- deux paires de hublots 20A, 20B et 21 A, 21 B protégeant les éléments optiques du dispositif 1 par rapport audit écoulement de particules ;
- deux prismes de renvoi 22 et 23 pour renvoyer vers les espaces de mesure ZM2 et ZM1, respectivement les faisceaux lumineux 7A et 7B ;
- un système 24 de soufflage d'air filtré, représenté partiellement sur la figure 3, commandé par exemple manuellement au moyen d'un bouton 25 et comprenant de préférence une pluralité d'injecteurs non représentés, pour souffler de l'air sur les faces externes des hublots 20A, 20B, 21 A et 21 B, comme illustré par des flèches f, de manière à empêcher tout dépôt de salissure (susceptible d'être optiquement perturbateur) sur ces hublots. Le système de soufflage 24 permet de plus de dégivrer les hublots 20A, 20B, 21 A et 21 B si nécessaire. L'air soufflé a donc une température suffisante pour éliminer tout givre sur lesdits hublots :

- un filtre interférentiel non représenté, qui est agencé à l'entrée de la caméra 3 et qui permet d'éliminer la lumière parasite susceptible d'atteindre ladite caméra 3 ; et
- un bouton de commande 26 commandant les moyens d'illumination M1 et les moyens de prise de vue M2, comme illustré respectivement par l'intermédiaire de liaisons 27 et 28.

De plus, pour éviter des interférences, toutes les optiques du dispositif 1 sont, de préférence, soumises à un traitement antireflet.

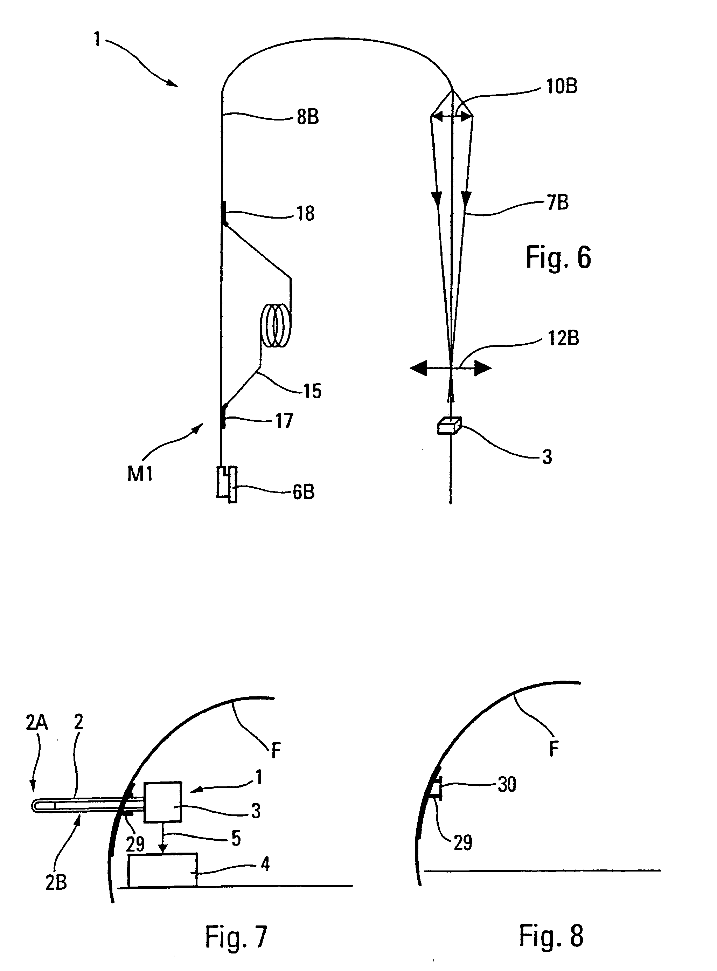

Par ailleurs, dans un mode de réalisation particulier, représenté partiellement et schématiquement sur la figure 6 :
- lesdits moyens d'illumination M1 sont formés de manière à émettre deux éclairs lumineux 7B espacés d'une durée prédéterminée ;
- ladite caméra 3 est formée de manière à prendre une image lors de l'émission de chacun desdits deux éclairs lumineux 7B ; et
- ladite unité de traitement 4 est formée de manière à déterminer le vecteur vitesse des particules, à partir des deux images relatives auxdits deux éclairs lumineux 7B et de ladite durée prédéterminée.

Pour émettre deux éclairs lumineux 7B espacés d'une durée prédéterminée, les moyens d'illumination M1 comportent une unique source lumineuse 6B et une fibre optique 8B qui est reliée à ladite source lumineuse 6B. Une ligne à retard 15 comprenant une fibre optique, de préférence bobinée, peut être montée en parallèle à ladite fibre optique 8B, par l'intermédiaire de coupleurs optiques 17, 18.

Lorsque la source laser 6B émet une impulsion lumineuse, une première moitié de cette dernière, correspondant à un premier éclair lumineux, est adressée directement à la caméra 3 par la fibre optique 8B et l'autre moitié, qui correspond au second éclair lumineux, pénètre au niveau du coupleur 17 dans la ligne à retard 15 présentant, par exemple, une longueur de 200 mètres et est ensuite adressée à la caméra 3 via le coupleur 18 et la fibre optique 8B, avec un retard correspondant au temps de traversée de la ligne à retard 15.

Le vecteur vitesse des particules ainsi mesurée peut être utilisée pour calibrer le dispositif 1 de manière à obtenir une représentativité de l'écoulement dans la zone de mesure ZM par rapport à l'écoulement dans l'environnement dans lequel est amenée la canne 2. La ligne à retard 15 permet de calibrer le dispositif en donnant l'indication du vecteur vitesse des particules. Cette indication permet de déterminer si la canne 2 est bien positionnée par rapport à l'écoulement de l'environnement dans lequel elle est plongée. Une fois la bonne position repérée et tout risque d'écoulement turbulent pouvant nuire à la qualité de la mesure évité, la ligne à retard est enlevée.

Par ailleurs, dans une application préférée, le dispositif 1 conforme à l'invention est monté sur un aéronef, par exemple un avion de transport civil, dont on a uniquement représenté une partie du fuselage F sur les figures 7 et 8, pour détecter la taille de gouttelettes d'eau présentes à l'extérieur de l'aéronef de manière à pouvoir caractériser des conditions givrantes et, le cas échéant, avertir le ou les pilotes de l'aéronef de la nécessité de déclencher un système de dégivrage.

Dans ce cas, le fuselage F de l'aéronef est pourvu d'un fourreau 29 :
- qui est agencé dans ledit fuselage F de l'aéronef de manière à créer une ouverture traversante ;
- qui présente un diamètre adapté au diamètre de la canne 2 du dispositif 1 de sorte que cette dernière puisse être agencée de façon étanche dans ledit fourreau 29 (figure 7) ; et
- qui est susceptible d'être fermé de façon étanche, par l'intermédiaire d'un bouchon 30 approprié et usuel, en l'absence de ladite canne 2 (figure 8).

Par conséquent, le dispositif 1 conforme à l'invention peut être monté et démonté, facilement et rapidement. De plus, on modifie le moins possible l'aérodynamique de l'aéronef.

En outre, à l'exception de la partie 2B (comprenant au moins l'extrémité 2A) de la canne 2 qui se trouve à l'extérieur du fuselage F, tout le reste du dispositif 1 est protégé de l'environnement extérieur et notamment desdites particules, par ledit fuselage F.

De plus, ladite partie 2B de la canne 2 est isolée électriquement de manière à rendre le dispositif 1 peu attractif vis-à-vis de la foudre.

Par conséquent, le dispositif 1 conforme à l'invention permet, dans l'application précitée, notamment de :
- mesurer la taille des gouttelettes d'eau présentes dans les nuages ;
- mesurer la concentration des gouttelettes, c'est-à-dire compter leur nombre par unité de volume. Ceci nécessite une connaissance précise du volume des espaces de mesure ZM1, ZM2 ;
- fournir en temps réel au pilote les données nécessaires à la conduite d'essais en vol ;
- enregistrer à bord de l'aéronef la totalité des informations. A cet effet, l'unité de traitement 4 comporte ou est associée à au moins une unité de stockage non représentée ;
- différencier les gouttelettes d'eau et les cristaux ; et
- mesurer la vitesse (dans un plan) desdites gouttelettes d'eau.

Une application préférée du dispositif 1 conforme à l'invention concerne donc la prévention et l'anticipation de conditions givrantes sur un aéronef.

Toutefois, de nombreuses autres applications sont également envisageables, telles que la fourniture à des autorités de certification, d'informations fiables et de qualité sur les conditions rencontrées par un aéronef lors d'essais en vol, la certification d'hélicoptères en vols stationnaires, la vérification des conditions produites dans des souffleries givrantes, des mesures au sol lors de mauvaises conditions de visibilité (brouillard, ...), ...

## Revendications

1. Dispositif pour déterminer les valeurs d'au moins un paramètre, notamment la taille, de particules, en particulier de gouttelettes d'eau, ledit dispositif (1) comportant :
- un élément de mesure (2) comprenant une zone de mesure (ZM) qui est destinée à recevoir lesdites particules ;
- des moyens d'illumination (M1) susceptibles de réaliser une illumination de ladite zone de mesure (ZM) ;
- des moyens de prise de vue (M2) comportant au moins une caméra (3) susceptible de prendre au moins une image de ladite zone de mesure (ZM) illuminée par lesdits moyens d'illumination (M1) ; et
- des moyens de traitement (4) susceptibles de déterminer les valeurs dudit paramètre, à partir de ladite image prise par la caméra (3),
**caractérisé en ce que** lesdits moyens d'illumination (M1) sont formés de manière à réaliser une source d'illumination ponctuelle, au moyen d'un faisceau lumineux (7A, 7B) dont les rayons lumineux (RA, RB) sont focalisés sur une optique d'objectif (12A, 12B) des moyens de prise de vue (M2).

2. Dispositif selon la revendication 1,
**caractérisé en ce que** lesdits moyens d'illumination (M1) comportent au moins un ensemble optique (5A, 5B) comprenant :
- une source lumineuse (6A, 6B) susceptible d'engendrer un faisceau lumineux (7A, 7B) ;
- une fibre optique (8A, 8B) reliée par une première extrémité (9A, 9B) à ladite source lumineuse (6A, 6B) et susceptible de transmettre un faisceau lumineux (7A, 7B) engendré par cette dernière ; et
- une optique de champ (10A, 10B) agencée à une seconde extrémité (11A, 11B) opposée à ladite première extrémité (9A, 9B) de ladite fibre optique (8A, 8B) et focalisant le faisceau lumineux émergeant de ladite fibre optique (8A, 8B) au centre de l'optique d'objectif (12A, 12B) des moyens de prise de vue (M2).

3. Dispositif selon la revendication 2,
**caractérisé en ce que** ladite fibre optique (8A, 8B) est une fibre monomode.

4. Dispositif selon l'une des revendications 1 à 3,
**caractérisé en ce que** lesdits moyens d'illumination (M1) comportent au moins une source lumineuse (6A, 6B) engendrant un faisceau lumineux cohérent.

5. Dispositif selon l'une quelconque des revendications 1 à 4,
**caractérisé en ce que** ladite caméra (3) comprend des moyens qui réalisent une ouverture de cette dernière pour prendre une image, **en ce que** lesdits moyens d'illumination (M1) réalisent l'illumination sous forme d'éclairs lumineux, et **en ce que** lesdits moyens d'illumination (M1) sont commandés de manière à émettre au moins deux éclairs lumineux pendant une seule et même ouverture de la caméra (3) lors d'une prise d'image.

6. Dispositif selon la revendication 5,
**caractérisé en ce que** lesdits moyens d'illumination (M1) comportent au moins un laser pulsé à absorbant saturable, pour émettre lesdits éclairs lumineux.

7. Dispositif selon l'une quelconque des revendications précédentes,
**caractérisé en ce que** lesdits moyens d'illumination (M1) sont formés de manière à émettre de façon séquentielle au moins deux faisceaux lumineux (7A, 78) présentant des diamètres différents.

8. Dispositif selon la revendication 7,
**caractérisé en ce que** lesdits moyens d'illumination (M1) comportent deux sources laser (6A, 6B) associées respectivement à des optiques (12A, 12B) de grandissements différents, et **en ce que** lesdits moyens de prise de vue (M2) comportent une seule caméra (3) et des moyens optiques (14, 16) permettant de diriger les deux faisceaux (7A, 7B) laser émis par lesdites deux sources laser (6A, 6B), sur ladite caméra (3).

9. Dispositif selon l'une quelconque des revendications précédentes,
**caractérisé en ce que** lesdits moyens de traitement (4) sont formés de manière à déterminer ledit paramètre par ombroscopie.

10. Dispositif selon l'une quelconque des revendications précédentes,
**caractérisé en ce que** lesdits moyens d'illumination (M1) sont formés de manière à émettre deux éclairs lumineux espacés d'une durée prédéterminée, **en ce que** ladite caméra (3) est formée de manière à prendre une image lors de l'émission de chacun desdits deux éclairs lumineux, et **en ce que** lesdits moyens de traitement (4) sont formés de manière à déterminer, comme paramètre, le vecteur vitesse desdites particules, à partir des deux images relatives auxdits deux éclairs lumineux et de ladite durée prédéterminée.

11. Dispositif selon la revendication 10,
**caractérisé en ce que** lesdits moyens d'illumination (M1) comportent au moins une source lumineuse (6B) et une fibre optique (8B) qui est reliée à ladite source lumineuse (6B).

12. Dispositif selon l'une quelconque des revendications précédentes,
**caractérisé en ce qu'**il comporte un filtre interférentiel qui est agencé à l'entrée de ladite caméra (3).

13. Dispositif selon l'une quelconque des revendications précédentes,
**caractérisé en ce qu'**il comporte un traitement antireflet.

14. Dispositif selon l'une quelconque des revendications précédentes,
**caractérisé en ce que** ladite zone de mesure (ZM) est délimitée par au moins un hublot (20A, 20B, 21 A, 21 B).

15. Dispositif selon la revendication 14,
**caractérisé en ce qu'**il comporte des moyens (24) pour souffler de l'air sur la face externe dudit hublot (20A, 20B, 21 A, 21 B).

16. Dispositif selon l'une quelconque des revendications précédentes,
**caractérisé en ce que** ledit élément de mesure (2) est une canne pourvue d'une ouverture traversante (19) à une première (2A) de ses extrémités, ladite ouverture traversante (19) contenant ladite zone de mesure (ZM).

17. Dispositif selon la revendication 16,
**caractérisé en ce qu'**il comporte une protection (F) protégeant contre lesdites particules tout ledit dispositif (1), à l'exception d'au moins ladite première extrémité (2A) de la canne (2) qui est amenée dans un environnement contenant lesdites particules.

18. Dispositif selon l'une des revendications 16 et 17,
**caractérisé en ce qu'**au moins ladite première extrémité (2A) de la canne (2) est isolée électriquement.

19. Aéronef,
**caractérisé en ce qu'**il comporte au moins un dispositif (1) tel que celui spécifié sous l'une quelconque des revendications 1 à 18, pour déterminer les valeurs dudit paramètre de gouttelettes d'eau présentes à l'extérieur dudit aéronef.

20. Aéronef selon la revendication 19,
**caractérisé en ce qu'**il comporte un dispositif (1) tel que celui spécifié plus particulièrement sous l'une quelconque des revendications 16 à 18, et **en ce qu'**il comporte de plus un fourreau (29) :
- qui est agencé dans le fuselage (F) de l'aéronef de manière à créer une ouverture traversante ;
- qui présente un diamètre adapté au diamètre de ladite canne (2) de sorte que cette dernière puisse être agencée de façon étanche dans ledit fourreau (29) ; et
- qui est susceptible d'être fermé de façon étanche, en l'absence de ladite canne (2).

## Patentansprüche

1. Vorrichtung zur Bestimmung der Werte mindestens eines Teilchenparameters, insbesondere der Größe, z.B. von Wassertröpfchen, wobei besagte Vorrichtung (1) ausgestattet ist mit:
- einem Messelement (2) mit einer Messzone (ZM), die dazu bestimmt ist, die besagten Teilchen aufzunehmen;
- Beleuchtungsinstrumenten (M1), die geeignet sind, eine Beleuchtung der besagten Messzone (ZM) vorzunehmen;
- Instrumenten zur Bildaufnahme (M2), die mit mindestens einer Kamera (3) ausgestattet sind, die geeignet ist, mindestens ein Bild von der besagten Messzone (ZM), die von den besagten Beleuchtungsinstrumenten (M1) beleuchtet wird, anzufertigen; und
- Bearbeitungsinstrumenten (4), die geeignet sind, anhand des von der Kamera (3) angefertigten Bildes die Werte des besagten Parameters zu bestimmen,
und die **dadurch gekennzeichnet ist, dass** die besagten Beleuchtungsinstrumente (M1) so aufgebaut sind, dass sie eine punktartige Lichtquelle mittels eines Strahlenbündels (7A, 7B) erzeugen, dessen Lichtstrahlen (RA, RB) auf eine Objektivoptik (12A, 12B) der Instrumente zur Bildaufnahme (M2) fokussiert werden.

2. Vorrichtung gemäß Anspruch 1,
**dadurch gekennzeichnet, dass** die besagten Beleuchtungsinstrumente (M1) mindestens eine optische Einheit (5A, 5B) enthalten, die Folgendes umfasst:
- eine Lichtquelle (6A, 6B), die geeignet ist, ein Strahlenbündel (7A, 7B) zu erzeugen;
- eine Lichtleitfaser (8A, 8B), die an einem ersten äußeren Ende (9A, 9B) mit besagter Lichtquelle (6A, 6B) verbunden und geeignet ist, ein von Letzterer erzeugtes Strahlenbündel (7A, 7B) zu übertragen; und
- eine Feldoptik (10A, 10B), die an einem zweiten äußeren Ende (11A, 11B) angebracht ist, das sich entgegengesetzt zu dem besagten ersten äußeren Ende (9A, 98) der besagten Lichtleitfaser (8A, 8B) befindet, und die das aus der besagten Lichtleitfaser (8A, 8B) austretende Strahlenbündel in die Mitte der Objektivoptik (12A, 12B) der Instrumente zur Bildaufnahme (M2) fokussiert.

3. Vorrichtung gemäß Anspruch 2,
**dadurch gekennzeichnet, dass** die besagte Lichtleitfaser (8A, 8B) eine Monomode-Faser ist.

4. Vorrichtung gemäß Ansprüchen 1 bis 3,
**dadurch gekennzeichnet, dass** die besagten Beleuchtungsinstrumente (M1) mit mindestens einer Lichtquelle (6A, 6B) ausgestattet sind, die ein kohärentes Strahlenbündel erzeugt.

5. Vorrichtung gemäß Ansprüchen 1 bis 4,
**dadurch gekennzeichnet, dass** die besagte Kamera (3) mit Mitteln ausgestattet ist, die eine Öffnung dieser Kamera zwecks Bildaufnahme vornehmen, dass die besagten Beleuchtungsinstrumente (M1) eine Beleuchtung in Form von Lichtblitzen vornehmen, und dass die besagten Beleuchtungsinstrumente (M1) so gesteuert sind, dass sie mindestens zwei Lichtblitze während ein- und derselben Öffnung der Kamera (3) während einer Bildaufnahme aussenden.

6. Vorrichtung gemäß Anspruch 5,
**dadurch gekennzeichnet, dass** die besagten Beleuchtungsinstrumente (M1) mit mindestens einem Impulslaser mit sättigbarem Absorber ausgestattet sind, um die besagten Lichtblitze auszusenden.

7. Vorrichtung gemäß jedes beliebigen der vorstehenden Patentansprüche,
**dadurch gekennzeichnet, dass** die besagten Beleuchtungsinstrumente (M1) so gestaltet sind, dass sie in Sequenzform mindestens zwei Strahlenbündel (7A, 7B) mit unterschiedlichen Durchmessern aussenden.

8. Vorrichtung gemäß Anspruch 7,
**dadurch gekennzeichnet, dass** die besagten Beleuchtungsinstrumente (M1) mit zwei Laserquellen (6A, 6B) ausgestattet sind, die jeweils mit Optiken (12A, 12B) von unterschiedlicher Vergrößerung verbunden sind, und dass die besagten Instrumente zur Bildaufnahme (M2) mit einer einzigen Kamera (3) und optischen Instrumenten (14, 16) ausgestattet sind, die es ermöglichen, die beiden, von den besagten Laserquellen (6A, 6B) ausgesendeten Strahlenbündel (7A, 7B) auf die besagte Kamera (3) zu lenken.

9. Vorrichtung nach einem der vorstehenden Ansprüche,
**dadurch gekennzeichnet, dass** die Bearbeitungsinstrumente (4) so ausgebildet sind, dass sie den Parameter durch Ombroskopie bestimmt.

10. Vorrichtung gemäß jedes beliebigen der vorstehenden Patentansprüche,
**dadurch gekennzeichnet, dass** die besagten Beleuchtungsinstrumente (M1) so aufgebaut sind, dass sie zwei Lichtblitze in einem vorher festgelegten Abstand aussenden, und dass die besagte Kamera (3) so aufgebaut ist, dass sie ein Bild bei Aussendung eines jeden der beiden Lichtblitze anfertigt, und dass die besagten Bearbeitungsinstrumente (4) so aufgebaut sind, dass sie als Parameter den Geschwindigkeitsvektor der besagten Teilchen bestimmen, anhand von zwei Bildern bezüglich der beiden Lichtblitze und anhand der besagten vorab festgelegten Dauer.

11. Vorrichtung gemäß Anspruch 10,
**dadurch gekennzeichnet, dass** die besagten Beleuchtungsinstrumente (M1) mit mindestens einer Lichtquelle (6B) und einer mit besagter Lichtquelle (6B) verbundenen Lichtleitfaser (8B) ausgestattet sind.

12. Vorrichtung gemäß jedes beliebigen der vorstehenden Patentansprüche,
**dadurch gekennzeichnet, dass** sie mit einem Interferenzfilter ausgestattet ist, der am Eingang der besagten Kamera (3) angebracht ist.

13. Vorrichtung gemäß jedes beliebigen der vorstehenden Patentansprüche,
**dadurch gekennzeichnet, dass** sie mit einer Entspiegelung ausgestattet ist.

14. Vorrichtung gemäß jedes beliebigen der vorstehenden Patentansprüche,
**dadurch gekennzeichnet, dass** die besagte Messzone (ZM) mit mindestens einer Luke (20A, 20B, 21A, 21 B) abgeschlossen ist.

15. Vorrichtung gemäß Anspruch 14,
**dadurch gekennzeichnet, dass** sie mit Instrumenten (24) zur Erzeugung von Luftstrom auf der Außenseite der besagten Luke (20A, 20B, 21A, 21 B) ausgestattet ist.

16. Vorrichtung gemäß jedes beliebigen der vorstehenden Patentansprüche,
**dadurch gekennzeichnet, dass** es sich bei dem besagten Messelement (2) um ein Rohr handelt, das mit einer durchgehenden Öffnung (19) an einem ersten (2A) seiner beiden äußeren Enden versehen ist, wobei diese durchgehende Öffnung (19) die besagte Messzone (ZM) enthält.

17. Vorrichtung gemäß Anspruch 16,
**dadurch gekennzeichnet, dass** sie mit einem Schutz (F) ausgestattet ist, der diese gesamte Vorrichtung (1) vor den besagten Teilchen schützt, mit Ausnahme zumindest des genannten ersten äußeren Endes (2A) des Rohrs (2), das in eine Umgebung hineinreicht, die die besagten Teilchen enthält.

18. Vorrichtung gemäß eines der Ansprüche 16 und 17,
**dadurch gekennzeichnet, dass** zumindest das besagte erste äußere Ende (2A) des Rohrs (2) elektrisch isoliert ist.

19. Luftfahrzeug,
**dadurch gekennzeichnet, dass** es mit mindestens einer Vorrichtung (1) wie unter jedem einzelnen der Patentansprüche 1 bis 18 beschrieben ausgestattet ist, um die Werte des besagten Parameters von den außerhalb des besagten Luftfahrzeugs vorhandenen Wassertröpfchen zu bestimmen.

20. Luftfahrzeug gemäß Anspruch 19,
**dadurch gekennzeichnet, dass** es mit einer Vorrichtung (1) ausgestattet ist, die unter jedem einzelnen der Patentansprüche 16 bis 18 genauer beschrieben wurde, und dass sie außerdem mit einer Ummantelung (29) ausgestattet ist:
- die so im Flugzeugrumpf (F) des Luftfahrzeuges angebracht ist, dass sie eine durchgehende Öffnung bildet;
- die einen Durchmesser aufweist, der an den Durchmesser des besagten Rohrs (2) dergestalt angepasst wurde, dass dieses Rohr auf abdichtende Weise in besagter Ummantelung (29) angebracht werden kann;
- die geeignet ist, bei Fehlen des besagten Rohrs (2) auf abdichtende Weise verschlossen zu werden.

## Claims

1. Device for determining the values of at least one parametre, especially the size, of particles, in particular of water droplets, said device (1) comprising:
- a measuring element (2) comprising a measuring region (ZM) which is intended to accommodate said particles;
- illumination means (M1) capable of illuminating said measuring region (ZM);
- image acquisition means (M2) comprising at least one camera (3) capable of acquiring at least one image of said measuring region (ZM) illuminated by said illumination means (M1); and
- processing means (4) capable of determining the values of said parametre, from said image acquired by the camera (3),
**characterized in that** said illumination means (M1) are constituted so as to produce a point illumination source, using a light beam (7A, 7B), the light rays (RA, RB) of which are focused onto an objective optic (12A, 12B) of the image acquisition means (M2).

2. Device according to Claim 1,
**characterized in that** said illumination means (M1) comprise at least one optical assembly (5A, 5B) comprising:
- a light source (6A, 6B) capable of generating a light beam (7A, 7B);
- an optical fibre (8A, 8B) connected by a first end (9A, 9B) to said light source (6A, 6B) and capable of transmitting a light beam (7A, 7B) generated by the latter; and
- a field optic (10A, 10B) fitted to a second end (11A, 11B) opposite said first end (9A, 9B) of said optical fibre (8A, 8B) and focusing the light beam emerging from said optical fibre (8A, 8B) on the centre of the objective optic (12A, 12B) of the image acquisition means (M2).

3. Device according to Claim 2,
**characterized in that** said optical fibre (8A, 8B) is a monomode fibre.

4. Device according to one of Claims 1 to 3,
**characterized in that** said illumination means (M1) comprise at least one light source (6A, 6B) generating a coherent light beam.

5. Device according to any one of Claims 1 to 4,
**characterized in that** said camera (3) comprises means which open the latter in order to acquire an image, **in that** said illumination means (M1) produce illumination in the form of light flashes, and **in that** said illumination means (M1) are controlled so as to emit at least two light flashes during one and the same opening of the camera (3) on acquiring an image.

6. Device according to Claim 5,
**characterized in that** said illumination means (M1) comprise at least one pulsed laser with a saturable absorber, in order to emit said light flashes.

7. Device according to any one of the preceding claims,
**characterized in that** said illumination means (M1) are constituted so as to emit in a sequential manner at least two light beams (7A, 7B) having different diametres.

8. Device according to Claim 7,
**characterized in that** said illumination means (M1) comprise two laser sources (6A, 6B) associated with optics (12A, 12B), respectively, of different magnifications, and **in that** said image acquisition means (M2) comprise a single camera (3) and optical means (14, 16) making it possible to direct the two laser beams (7A, 7B) emitted by said two laser sources (6A, 6B), onto said camera (3).

9. Device according to any one of the preceding claims,
**characterized in that** said processing means (4) are constituted so as to determine said parametre by shadowgraphy.

10. Device according to any one of the preceding claims,
**characterized in that** said illumination means (M1) are constituted so as to emit two light flashes spaced apart by a predetermined duration, **in that** said camera (3) is constituted so as to acquire an image on emission of each of said two light flashes, and **in that** said processing means (4) are constituted so as to determine, as a parametre, the velocity vector of said particles, from the two images relating to said two light flashes and from said predetermined duration.

11. Device according to Claim 10,
**characterized in that** said illumination means (M1) comprise at least one light source (6B) and an optical fibre (8B) which is connected to said light source (6B).

12. Device according to any one of the preceding claims,
**characterized in that** it comprises an interference filter which is fitted to the entrance of said camera (3).

13. Device according to any one of the preceding claims,
**characterized in that** it comprises an antireflection treatment.

14. Device according to any one of the preceding claims,
**characterized in that** said measuring region (ZM) is delimited by at least one window (20A, 20B, 21A, 21B).

15. Device according to Claim 14,
**characterized in that** it comprises means (24) to blow air over the external face of said window (20A, 20B, 21A, 21B).

16. Device according to any one of the preceding claims,
**characterized in that** said measuring element (2) is a rod provided with a through opening (19) at a first (2A) of its ends, said through opening (19) containing said measuring region (ZM).

17. Device according to Claim 16,
**characterized in that** it comprises a protection (F) which protects the entire said device (1), except for at least said first end (2A) of the rod (2) which is placed in an environment containing said particles, against said particles.

18. Device according to either of Claims 16 and 17,
**characterized in that** at least said first end (2A) of the rod (2) is electrically insulated.

19. Aircraft,
**characterized in that** it comprises at least one device (1) such as that specified in any one of Claims 1 to 18, for determining the values of said parametre of water droplets present outside said aircraft.

20. Aircraft according to Claim 19,
**characterized in that** it comprises a device (1) such as that specified most particularly in any one of Claims 16 to 18, and **in that** it further comprises a sleeve (29):
- which is fitted into the fuselage (F) of the aircraft so as to create a through opening;
- which has a diametre adapted to the diametre of said rod (2) such that the latter can be fitted in a sealed manner in said sleeve (29); and
- which is capable of being closed in a sealed manner, in the absence of said rod (2).
